# EUROPÄISCHE PATENTSCHRIFT

(11) **EP 3 314 210 B1**
(45) Veröffentlichungstag und Bekanntmachung des Hinweises auf die Patenterteilung: **26.02.2020**
(21) Anmeldenummer: 16732978.8
(22) Anmeldetag: 14.06.2016
(51) Int. Cl.: G01F 15/02, G01D 3/036, G01F 1/66

(54) **FELDGERÄT MIT KOMPENSATIONSSCHALTUNG ZUR ELIMINIERUNG VON UMGEBUNGSEINFLÜSSEN**
FIELD DEVICE HAVING A COMPENSATION CIRCUIT FOR ELIMINATING ENVIRONMENTAL INFLUENCES
APPAREIL ÉMETTEUR DE CHAMPS DOTÉ D'UN CIRCUIT DE COMPENSATION POUR L'ÉLIMINATION DES IMPACTS ENVIRONNEMENTAUX

(30) Priorität: 23.06.2015 DE 102015110050
(43) Veröffentlichungstag der Anmeldung: 02.05.2018
(73) Patentinhaber: Endress+Hauser Flowtec AG, 4153 Reinach (CH)
(72) Erfinder: WIEST, Achim, 79576 Weil am Rhein (DE); BRUMBERG, Oliver, 79618 Rheinfelden (DE)
(74) Vertreter: Andres, Angelika Maria
(86) Internationale Anmeldenummer: PCT/EP2016/063539
(87) Internationale Veröffentlichungsnummer: WO 2016/207015

(56) Entgegenhaltungen:
- DE-A1- 3 411 306
- DE-A1-102004 053 884
- DE-A1-102007 024 006
- US-A1- 2005 001 487
- US-A1- 2009 030 634

## Beschreibung

Die Erfindung betrifft eine Vorrichtung zur Überwachung mindestens einer physikalischen oder chemischen Prozessgröße umfassend zumindest einen Messzweig und einen dazu parallel geschalteten Kompensationszweig. Der Messzweig dient dabei der Erfassung der zumindest einen Prozessgröße, und der Kompensationszweig zur Kompensation des Einflusses von mindestens einem externen Umwelt- und/oder Umgebungsparameter auf die jeweilige Prozessgröße und/oder auf die Messung der Prozessgröße.

Die Prozessgröße ist beispielsweise gegeben durch den Durchfluss eines strömenden Fluides durch ein Messrohr oder durch den Füllstand eines Mediums in einem Behälter. Aber auch andere Prozessgrößen fallen unter die Erfindung, wie beispielsweise die Viskosität oder die Dichte des Mediums. Entsprechende Feldgeräte werden von der Anmelderin in großer Vielfalt hergestellt und vertrieben.

Die Erfassung der jeweiligen Prozessgröße kann durch verschiedenste äußere Umwelt- und/oder Umgebungsparameter beeinflusst sein, welche das Messergebnis negativ beeinflussen. Ein Beispiel ist gegeben durch den Einfluss der Temperatur, genauer der Temperatur des Mediums, oder unter Umständen auch der Temperatur der Umgebung. Dies spielt in vielen verschiedenen Feldgeräten eine große Rolle, und somit sind unterschiedlichste Maßnahmen zur Kompensation des Einflusses der Temperatur auf die Erfassung einer Prozessgröße mittels eines Feldgerätes bekannt geworden. Diese Maßnahmen sind dabei so unterschiedlich wie es die verschiedenen Messprinzipien sind.

Beispielsweise ist in der DE102010030791A1 eine Kompensationsschaltung für den Einfluss der Temperatur für ein vibronisches Füllstandsmessgerät beschrieben worden. Das zugrundeliegende Messprinzip ist aus einer Vielzahl von Veröffentlichungen bekannt. Eine schwingfähige Einheit wird mittels einer elektromechanischen Wandlereinheit über ein elektrisches Anregesignal zu mechanischen Schwingungen angeregt. Zur Beseitigung des Einflusses der Temperatur auf die Messung ist der elektromechanischen Wandlereinheit ein Referenzelement parallel geschaltet, welches ebenfalls mit dem Anregesignal beaufschlagt wird. Mittels eines Algorithmus wird das vom Referenzelement erhaltenen schwingungsunabhängigen Referenzsignals mit dem Messsignal verrechnet und wodurch der Einfluss der Temperatur kompensiert werden kann.

Eine Temperaturkompensationsschaltung wurde ebenfalls vielfach in Zusammenhang mit Ultraschall-Durchflussmessgeräten diskutiert. Auch für diese Kategorie von Feldgeräten sind die zugrundeliegenden Messprinzipien aus einer Vielzahl von Veröffentlichungen bekannt geworden. Beim Laufzeit-Differenz-Prinzip wird die unterschiedliche Laufzeit von Ultraschallimpulsen relativ zur Strömungsrichtung des Mediums ausgewertet, während beim Doppler-Prinzip ein Ultraschallpuls einstellbarer Frequenz in das Medium eingekoppelt und das jeweils reflektierte Signal detektiert wird.
Zur Eliminierung des Einflusses der Temperatur für einen Piezoschwinger beschreibt die DE19820208A1 die Integration eines temperaturabhängigen Bauteils in Form eines parallelgeschalteten temperaturabhängigen Widerstandes. Dabei werden sowohl der Durchfluss als auch die Temperatur über die gleiche Signalleitung übertragen. Deshalb kann nachteilig bei einer derartigen Schaltungsanordnung die Temperaturmessung durch eine zusätzliche Erwärmung des temperaturabhängigen Widerstands negativ beeinflusst werden.
Gemäß der DE10057188B4 kann eine Spule zur energetischen Entkopplung des Temperatursensors vom Ultraschallsignalgeber durch die Integration einer Spule erreicht werden. Allerdings können bei einer Spule in Folge von Eigenerwärmung Schwankungen für den Widerstand und/oder die Induktivität auftreten, welche ebenfalls einen negativen Einfluss auf die Bestimmung der Temperatur haben.
Die DE102013100670A1 offenbart ein Ultraschall-Durchflussmessgerät mit einer Temperaturkompensation, welche durch einen zu einem Piezoelement parallel geschalteten Temperatursensor vorgenommen wird, welcher Temperatursensor ein temperaturabhängiges Messelement, einen Vorwiderstand zur Leistungsbegrenzung und/oder eine Begrenzungsschaltung umfasst, und wobei die Temperatur in den Messpausen der Ultraschall Durchflussmessung und/oder während des Sendens eines Ultraschallwandlers in der Messschaltung bestimmt wird.
Bei allen diesen Kompensationsschaltungen für Ultraschall-Durchflussmessgeräte werden die Messsignale zur Durchflussmessung und zur Temperaturkompensation über die gleiche Leitung übertragen. Ferner ist es erforderlich, dass innerhalb einer Elektronikeinheit, in welcher die Messsignale verarbeitet werden sowie der Durchfluss bestimmt wird, zwischen einem Modul für die Durchflussmessung und einem weiteren Modul für die Temperaturmessung umgeschaltet wird. Dies ist zum einen eine vergleichsweise aufwendige Lösung und zum anderen kann nicht vermieden werden, dass im Zuge der Signalübertragung mittels der gleichen Leitung ein gegenseitiger Einfluss der Temperatur- und Durchflussmessung besteht.

Die DE 10 2007 024 006 A1 sowie DE 10 2004 053 884 A1 offenbaren ähnliche Vorrichtungen zur Überwachung einer physikalischen Prozessgröße.

Neben der Temperatur kann der externe Umwelt- und/oder Umgebungsparameter beispielsweise auch durch die Ausdehnung einer Rohrwand unter Druckeinwirkung eines strömenden Mediums gegeben sein. Für diesen Einfluss sind im Stand der Technik ähnliche Ansätze wie für die Ultraschall-Durchflussmessgeräte bekannt geworden, um den Einfluss auf die Messung des Durchflusses zu bestimmen, welche Ansätze entsprechend auch ähnliche Nachteile aufweisen.

Es wäre jedoch wünschenswert, einen externen Umwelt- und/oder Umgebungsparameter auf eine Messgröße zu bestimmen, so dass er durch die eigentliche Messung nicht beeinflusst wird.

Der vorliegenden Erfindung liegt die Aufgabe zugrunde, eine Vorrichtung zur Überwachung mindestens einer physikalischen oder chemischen Prozessgröße mit einem adaptiven Kompensationszweig zur Kompensation des Einflusses von mindestens einem externen Umwelt- oder Umgebungsparameter auf die jeweilige Prozessgröße oder deren Messung bereitzustellen, bei welcher sich die Bestimmung der Prozessgröße und die Bestimmung der Kompensationsgröße gegenseitig nicht beeinflussen.

Diese Aufgabe wird erfindungsgemäß gelöst durch eine Vorrichtung zur Überwachung mindestens einer physikalischen oder chemischen Prozessgröße umfassend zumindest einen Messzweig und einen dazu parallel geschalteten Kompensationszweig zur Kompensation des Einflusses von mindestens einem externen Umwelt- oder Umgebungsparameter auf die Prozessgröße und/oder auf die Messung der Prozessgröße, wobei der Messzweig zumindest eine primäre Sensoreinheit und eine primäre Elektronikeinheit zur Signalerfassung, -auswertung, und/oder -speisung umfasst, wobei der Kompensationszweig über zumindest eine sekundäre Sensoreinheit und eine sekundäre Elektronikeinheit verfügt, wobei die sekundäre Sensoreinheit so ausgestaltet ist, dass sie eine für den mindestens einen externen Umwelt- oder Umgebungsparameter charakteristische physikalische oder chemische Größe erfasst, wobei die sekundäre Elektronikeinheit so ausgestaltet ist, dass sie die benötigte Energie aus dem Messzweig bezieht, und dass sie aus der charakteristischen physikalischen oder chemischen Größe ein Kompensationssignal erzeugt, welches sie an die primäre Elektronikeinheit des Messzweiges überträgt.

Erfindungsgemäß sind also der Messzweig und der Kompensationszweig energetisch entkoppelt. Die Entkopplung bezieht sich dabei auf die Erzeugung des Kompensationssignals. Die sekundäre Elektronikeinheit bezieht die benötigte Energie aus dem Messzweig, versorgt die sekundäre Sensoreinheit, und verarbeitet die mittels der sekundären Sensoreinheit erfasste charakteristische physikalische oder chemische Größe. Mittels der sekundären Elektronikeinheit und der sekundären Sensoreinheit kann die Kompensationsgröße also lokal und im Kompensationszweig ermittelt und aufbereitet werden, so dass sich die beiden Messungen nicht gegenseitig negativ beeinflussen. Vorteilhaft bedarf es ferner innerhalb der primären Elektronikeinheit keiner ergänzenden Bauteile zur Integration der Kompensationsgrößenmessung, wie zum Beispiel Schalter zum Umschalten zwischen einem Modus zur Messung der Prozessgröße und einem zweiten Modus zur Messung der Kompensationsgröße.

Welchen Umwelt- und/oder Umgebungsparameter es im jeweiligen Fall zu kompensieren gilt, hängt dabei stark von der jeweiligen Anwendung ab. Es kann sich dabei um die Temperatur handeln, aber auch um die Ausdehnung einer Rohrwand unter Druckeinwirkung eines strömenden Mediums, oder beispielsweise um die Luftfeuchtigkeit. Unabhängig von dem spezifischen Umwelt- und/oder Umgebungsparameter kann eine erfindungsgemäße Vorrichtung eingesetzt werden, in dem eine passende sekundäre Sensoreinheit gewählt wird, welche dazu geeignet ist, eine mit dem Umwelt- und/oder Umgebungsparameter in einer mathematischen, chemischen oder physikalischen Relation stehende charakteristische physikalische oder chemische Größe zu erfassen. Aus dieser Größe kann dann ein Kompensationssignal, insbesondere ein elektrisches Kompensationssignal, erzeugt werden, welches an den Messzweig übertragen wird.

In einer bevorzugten Ausgestaltung ist die die primäre Sensoreinheit mit einem getakteten Signal beaufschlagt, wobei die sekundäre Elektronikeinheit so ausgestaltet ist, dass sie das Kompensationssignal während der Sendepausen oder Empfangspausen an die primäre Elektronikeinheit übermittelt. Dies ist die einfachste Möglichkeit der Übertragung der Kompensationsgröße an die primäre Elektronikeinheit. Die Kompensationsgröße kann dem Messsignal aber auch überlagert und/oder auf moduliert werden.

In einer anderen Ausgestaltung sind die primäre und sekundäre Elektronikeinheitje mit einem Funkmodul oder optischen Übertragungsmodul ausgestattet, wobei das Kompensationssignal mittels des Funkmoduls oder optischen Übertragungsmoduls an die primäre Elektronikeinheit übermittelt wird.

Eine besonders bevorzugte Ausgestaltung beinhaltet, dass der zu kompensierende externe Umwelt- und/oder Umgebungsparameter durch die Temperatur gegeben ist. Dabei ist es von Vorteil, wenn zur Erfassung der Temperatur zumindest ein Widerstand, insbesondere ein temperaturabhängiger Widerstand, vorgesehen ist. Die den mindestens einen externen Umwelt- und/oder Umgebungsparameter mindestens eine charakterisierende physikalische oder chemische Größe ist dann gegeben durch einen elektrischen Widerstand oder auch durch eine Zeitkonstante. Hierbei handelt es sich um einen weit verbreiteten Ansatz für die Temperaturbestimmung. Alternativ ist es möglich, wenn zur Erfassung der Temperatur zumindest ein Kondensator, insbesondere ein temperaturabhängiger Kondensator, vorgesehen ist, wobei die den mindestens einen externen Umwelt- und/oder Umgebungsparameter mindestens eine charakterisierende physikalische oder chemische Größe durch die Zeitkonstante des zumindest einen Kondensators gegeben ist. Diese zweite Variante ist besonders vorteilhaft, da die Ermittlung der Temperatur in diesem Falle über die Zeitkonstante der Lade- und/oder Entladeströme ermittelt wird. Dies erlaubt zum einen eine genauere Bestimmung der Temperatur. Zum anderen ermöglicht die Erfassung der Temperatur in Form einer Zeitkonstante eine digitale Übertragung der Kompensationsgröße an die primäre Elektronikeinheit. Neben der Temperatur können mittels eines Kondensators im Kompensationszweig darüber hinaus auch weitere Umwelt- und/oder Umgebungsparameter kompensiert werden, wie zum Beispiel die Luftfeuchtigkeit.

In einer weiteren besonders bevorzugten Ausgestaltung ist der zu kompensierende Umwelt- und/oder Umgebungsparameter gegeben durch die Ausdehnung einer Rohrwand des Messrohres eines Durchflussmessgeräts, welches mit einem unter Druck stehenden Fluid durchflossen ist. Dabei wiederum ist es von Vorteil, wenn zur Messung der Ausdehnung der Rohrwand mindestens zwei Dehnmesstreifen, insbesondere in Form von dehnungsabhängigen Widerständen, vorgesehen sind.

Unabhängig davon, welche Größe als Kompensationsgröße vorgesehen ist, ist es von Vorteil, wenn die Kommunikation zwischen der primären Sensoreinheit und primären Elektronikeinheit im Messzweig und die Kommunikation zwischen der sekundären Sensoreinheit und sekundären Elektronikeinheit im Kompensationszweig äquivalent erfolgen. Insbesondere bedarf es innerhalb der primären Elektronikeinheit keiner Zusatzelektronik oder zusätzlicher elektronischer Bauteile. Beispielsweise kann mittels des Kompensationszweigs ein Kompensationssignal erzeugt werden, welches in einem Zeitfenster, in welchem keine Messsignale oder auch Anregesignale zwischen der primären Sensoreinheit und primären Elektronikeinheit übertragen werden, an den Messzweig übermittelt werden, wo es anhand der ohnehin innerhalb der primären Elektronikeinheit vorhandenen elektronischen Komponenten ausgewertet werden kann. Es ist ferner insbesondere von Vorteil, wenn das Messsignal und/oder Kompensationssignal jeweils durch eine Zeit, Zeitkonstante, und/oder Frequenz gegeben sind.

In einer bevorzugten Ausgestaltung sind die primäre und sekundäre Elektronikeinheit mit einer Einheit zur bidirektionalen Kommunikation ausgestattet. Somit kann nicht nur die Kompensationsgröße an die primäre Elektronikeinheit übertragen werden, sondern es können umgekehrt auch Parameter, beispielsweise der Messung oder des Sensors, von der primären zur sekundären Elektronikeinheit sowie umgekehrt, übertragen und elektronisch gespeichert werden. Gegebenenfalls erfordert die Ausstattung der Vorrichtung mit Mitteln zur bidirektionalen Kommunikation die Integration zusätzlicher elektronischer Bauteile. Alternativ können auch auf Algorithmus-Ebene bestimmte Codes vereinbart werden, die beispielsweise das Einführen bestimmter Zeitfenster beinhalten, in welchen keine Signalübertragung zwischen der primären Sensoreinheit und primären Elektronikeinheit stattfinden. Innerhalb dieser Zeitfenster kann dann die sekundäre Elektronikeinheit das Kompensationssignal an den Messzweig übertragen.

Es ist von Vorteil, wenn die primäre und sekundäre Elektronikeinheit so ausgestaltet sind, dass eine digitale Übertragung eines im Messzweig generierten, in einem Zusammenhang mit der Prozessgröße stehenden primären Messsignals und des Kompensationssignals möglich ist. Die digitale Übertragung kann sich hierbei sowohl auf ein Zeitintervall als auch auf ein Frequenzband beziehen.

Ferner ist es von Vorteil, wenn der Kompensationszweig so ausgestaltet ist, dass er einen störenden Einfluss auf den Messzweig von weniger als 1%, insbesondere weniger als 0,05%, insbesondere weniger als 10ppm, aufweist. Die Angaben beziehen sich hierbei jeweils auf die Amplitude des Messsignals.

In einer weiteren bevorzugten Ausgestaltung ist der Kompensationszweig so ausgestaltet, dass mehrere externe Umwelt- und/oder Umgebungsparameter gleichzeitig kompensierbar und/oder messbar sind. Beispielsweise kann sowohl der Einfluss der Temperatur als auch der Einfluss der Ausdehnung der Rohrwand gleichzeitig erfasst und eliminiert werden.

Ferner ist es von Vorteil, wenn die elektrische Verbindung zwischen der primären Sensoreinheit und der primären Elektronikeinheit aus mindestens zwei Leitern besteht. Durch die Verwendung von genau zwei Leitern wird eine Übertragung des Kompensationssignals an den Messzweig direkt über die elektrischen Leitungen zwischen der primären Sensoreinheit und primären Elektronikeinheit bewerkstelligt. Da bei dieser Ausgestaltung also keine weiteren Leitungen notwendig sind, handelt es sich um eine besonders kosteneffiziente Lösung.

In einer bevorzugten Ausgestaltung ist die Prozessgröße der Durchfluss eines strömenden Fluides durch ein Messrohr oder der Füllstand eines Mediums in einem Behälter.

In einer weiteren bevorzugten Ausgestaltung ist die primäre Sensoreinheit eine Sensoreinheit für ein Ultraschall-Durchflussmessgerät.

Die erfindungsgemäße Aufgabe wird ferner gelöst durch ein Verfahren zur Überwachung einer physikalische oder chemische Prozessgröße mittels einer Vorrichtung mit zumindest einen Messzweig und einem dazu parallel geschalteten Kompensationszweig zur Kompensation des Einflusses von mindestens einem externen Umwelt- und/oder Umgebungsparameter auf die Prozessgröße, wobei im Messzweig die Prozessgröße ermittelt wird, wobei im Kompensationszweig eine mindestens einen externen Umwelt- oder Umgebungsparameter charakterisierende physikalische oder chemische Größe ermittelt wird, wobei die für die Messung des externen Umwelt- und/oder Umgebungsparameter benötigte Energie aus dem Messzweig bezogen wird, und wobei aus der charakteristischen physikalischen oder chemischen Größe das Kompensationssignal ermittelt wird, welches an die Elektronikeinheit des Messzweiges übertragen wird.

Zusammenfassend erlaubt eine erfindungsgemäße Vorrichtung und/oder die Anwendung des erfindungsgemäßen Verfahrens die Erfassung einer physikalischen oder chemischen Prozessgröße frei vom Einfluss von zumindest einem Umwelt- und/oder Umgebungsparameter. Dieser Umwelt- und/oder Umgebungsparameter kann insbesondere gegeben sein durch die Temperatur oder auch durch die Ausdehnung eines Rohres als Reaktion auf ein unter Druck durch die Rohrleitung fließenden Fluids oder die Luftfeuchtigkeit. Im Gegensatz zu anderen Maßnahmen zur Eliminierung und/oder Kompensation des mindestens einen externen Umwelt- und/oder Umgebungsparameter aus dem Stand der Technik erfolgt die Kompensation erfindungsgemäß lokal. Somit wird erreicht, dass sich die Bestimmung der Prozessgröße und der Kompensationsgröße nicht gegenseitig beeinflussen. Vorteilhaft kann eine adaptive Kommunikation ermöglicht werden. Darüber hinaus sind der Messzweig und Kompensationszweig energetisch voneinander entkoppelt. Die Entkopplung bezieht sich dabei auf die Erzeugung des Kompensationssignals. Die sekundäre Elektronikeinheit bezieht die benötigte Energie aus dem Messzweig, versorgt die sekundäre Sensoreinheit, und verarbeitet die mittels der sekundären Sensoreinheit erfasste charakteristische physikalische oder chemische Größe. Schließlich liegt ein weiterer Vorteil darin, dass für die Aufbereitung des Messsignals mittels des Kompensationssignals innerhalb der sekundären Elektronikeinheit keine weiteren speziell für diese Aufgabe ausgelegten Bauteile notwendig sind. Die Aufbereitung kann auf Software Ebene erfolgen.

Es versteht sich von selbst, dass die vorliegende Erfindung nicht auf die hier genannten Beispiele für externe Umwelt- und/oder Umgebungsparameter beschränkt ist. Ebenfalls versteht es sich von selbst, dass neben den hier genannten Messmethoden zur Erfassung der Temperatur oder der Ausdehnung einer Rohrwand auch andere Möglichkeiten bekannt sind, welche ebenfalls angewendet werden können und unter die vorliegende Erfindung fallen.

Die Erfindung sowie einige vorteilhafte Ausführungsbeispiele werden nachfolgend mittels der beiliegenden Figuren Fig. 1 - Fig. 6 näher beschrieben:
Es zeigt:
Fig. 1 ein Blockschaltbild einer erfindungsgemäßen Vorrichtung,
Fig. 2 eine Skizze eines Ultraschall-Durchflussmessgeräts gemäß dem Stand der Technik,
Fig. 3 (a) ein Blockschaltbild einer erfindungsgemäßen Kompensationsschaltung zur Kompensation des Einflusses der Temperatur mittels eines Widerstands, und (b) das Kompensationssignal entsprechend der Kompensation der Temperatur mittels eines Widerstands als Funktion der Zeit,
Fig. 4 ein Blockschaltbild einer erfindungsgemäßen Kompensationsschaltung zur Kompensation des Einflusses der Temperatur mittels eines Kondensators, und (b) das Kompensationssignal entsprechend der Kompensation der Temperatur mittels eines Kondensators als Funktion der Zeit,
Fig. 5 ein Blockschaltbild einer erfindungsgemäßen Kompensationsschaltung zur Kompensation des Einflusses der Ausdehnung einer Rohrwand mittels zweier Dehnungsmessstreifen, und (b) das Kompensationssignal entsprechend der Kompensation der Ausdehnung einer Rohrwand mittels zwei dehnungsabhängigen Widerständen als Funktion der Zeit,
   und
Fig. 6 ein Blockschaltbild einer erfindungsgemäßen Kompensationsschaltung zur Kompensation des Einflusses der Temperatur und der Ausdehnung einer Rohrwand.

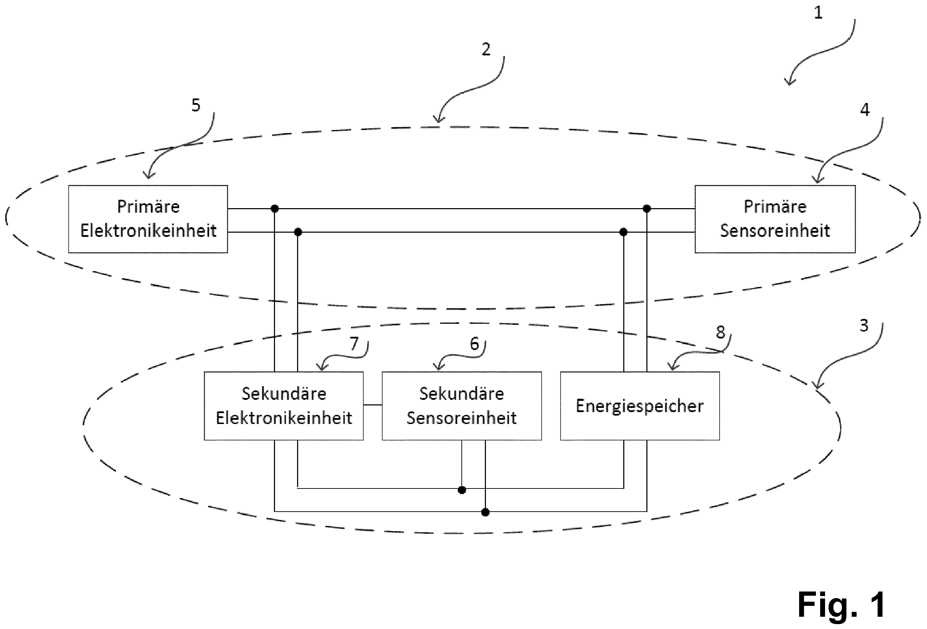

In Fig. 1 ist ein Blockschaltbild einer erfindungsgemäßen Vorrichtung 1 entsprechend der Merkmale des Anspruchs 1 gezeigt, welche einen Messzweig 2 und einen Kompensationszweig 3 zur Kompensation des Einflusses von mindestens einem externen Umwelt- und/oder Umgebungsparameter aufweist. Der Messzweig 2 umfasst eine primäre Sensoreinheit 4 und eine primäre Elektronikeinheit 5. Dazu parallel geschaltet ist der Kompensationszweig 3 angeordnet, welcher wiederum eine sekundäre Sensoreinheit 6 und eine sekundäre Elektronikeinheit 7 umfasst. Da die sekundäre Elektronikeinheit 7 die zur Bestimmung der Kompensationsgröße benötigte Energie aus dem Messzweig 2 bezieht, ist in dieser Ausgestaltung ferner ein Energiespeicher 8 integriert. Dieser ist allerdings nicht zwingend notwendig. Ferner kann der gemäß Fig. 1 ausgestaltete Referenzzweig 3, welcher mit zwei Verbindungsleitungen zur Energieversorgung und Datenübertragung ausgestattet ist, im Falle dass innerhalb des Referenzzweigs 3 beispielsweise ein Modul zur Energieerzeugung integriert ist (nicht gezeigt), wie beispielsweise ein Solarmodul, auch mittels einer einzigen Verbindungsleitung realisierbar.

Sollte die Vorrichtung 1 dazu ausgelegt sein, dass mehr als ein Umwelt- und/oder Umgebungsparameter kompensiert werden soll, kann das im Kompensationszweig 3 generierte Kompensationssignal mehrere Flanken aufweisen.

Der Einfachheit halber bedienen sich alle nachfolgenden Ausführungen dem Beispiel eines Ultraschall-Durchflussmessgeräts mit einer Kompensationsschaltung. Es versteht sich jedoch von selbst, dass auch andere Feldgeräte unter die vorliegende Erfindung fallen. Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen. Entsprechende Feldgeräte werden von der Anmelderin in großer Vielfalt hergestellt und beispielsweise unter der Bezeichnung Prosonic DDU10 oder Prosonic Proline P vertrieben. Beim Laufzeit-Differenz-Prinzip wird die unterschiedliche Laufzeit von Ultraschallimpulsen relativ zur Strömungsrichtung des Mediums ausgewertet, während beim Doppler-Prinzip ein Ultraschallpuls einstellbarer Frequenz in das Medium eingekoppelt und das jeweils reflektierte Signal detektiert wird.

Die Ultraschallwellen werden üblicherweise mittels mindestens eines Ultraschallwandlers erzeugt bzw. empfangen, welche entweder in der Rohrwandung angebracht sind, wie im Falle von Inline Geräten, oder von außen an die Rohrwand gepresst, wie bei Clamp-On Geräten. Ein Ultraschallwandler umfasst dabei üblicherweise eine elektromechanische Wandlereinheit, wie beispielsweise ein piezoelektrisches Element, und eine Koppelschicht. In der elektromechanischen Wandlereinheit wird die Ultraschallwelle als akustisches Signal erzeugt und über die Koppelschicht entweder direkt oder bei Clamp-On Geräten mit dem Zwischenschritt über die Rohrleitung, in das Fluid eingekoppelt.

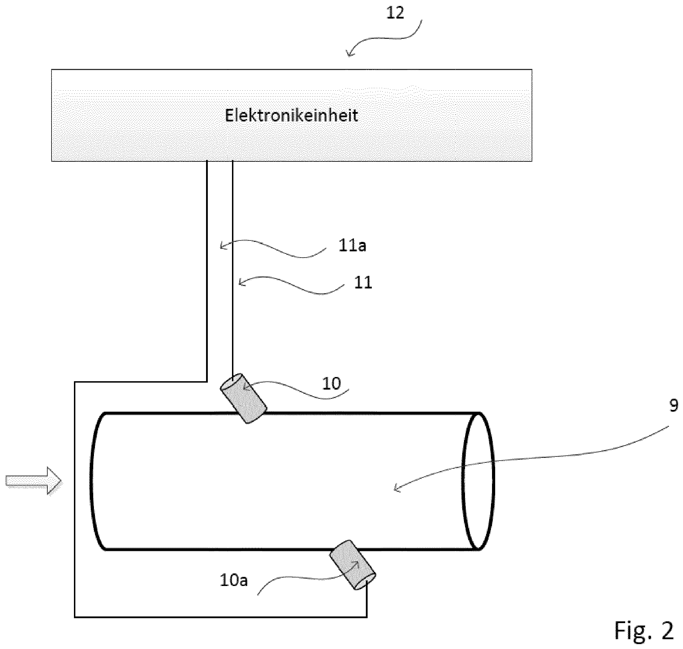

Eine Skizze eines Ultraschall-Durchflussmessgeräts gemäß Stand der Technik ist in Fig. 2 gezeigt. Dargestellt ist das von einem strömenden Fluid (Strömungsrichtung angedeutet durch den Pfeil) durchflossene Messrohr 9. An oder in die Wandung des Messrohres 9 sind entlang einer gedachten Verbindungslinie durch das Messrohr 9 hindurch zwei Ultraschallwandler 10,10a angeordnet. Die Ultraschallwandler 10,10a sind mittels zweier Verbindungskabel 11,11a mit einer Elektronikeinheit 12 verbunden, welche der Signalerfassung, -auswertung, und/oder -speisung dient.

Für viele Anwendungen eines Ultraschall-Durchflussmessgeräts ist es zweckdienlich, zumindest einen Umwelt- und/oder Umgebungsparameter, wie beispielsweise die Temperatur oder die Ausdehnung einer Rohrwand unter Druckeinwirkung eines strömenden Mediums zu kompensieren, um die Messung des Durchflusses zu verbessern. Dies lässt sich durch die Integration eines erfindungsgemäßen Kompensationszweiges bewerkstelligen.

Für das Beispiel einer Ultraschall-Durchflussmessung mit Kompensation zumindest eines Umwelt- und/oder Umgebungsparameters sind die beiden Ultraschallwandler 10,10a Bestandteil der primären Sensoreinheit und die Elektronikeinheit 12 wird zur erfindungsgemäßen primäre Elektronikeinheit 5. Parallel zu diesem Aufbau aus primärer Sensoreinheit 4 und primärer Elektronikeinheit 5 wird erfindungsgemäß der Kompensationszweig 3 geschaltet. Die für die Kompensationsmessung benötigte Energie wird erfindungsgemäß aus dem Messzweig bezogen. Da in der Ultraschall-Durchflussmessung üblicherweise mit Sende- und Empfangssignalen in Form von Pulspaketen gearbeitet wird, bietet es sich an, das Kompensationssignal während der Sendepausen der Ultraschall-Durchflussmessung zu übertragen.

Die nachfolgenden Figuren beschränken sich der Einfachheit halber auf den Ausschnitt des jeweiligen Kompensationszweigs 3 in unterschiedlichen Ausführungen. Gestrichte Bezugszeichen beziehen sich dabei auf unterschiedliche Ausführungsbeispiele.

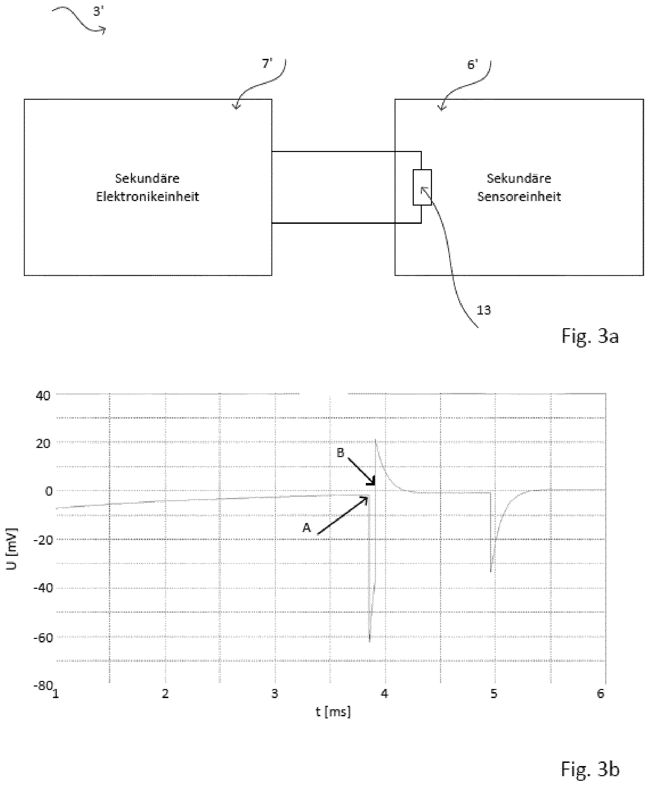

In Fig. 3 ist eine Möglichkeit zur Kompensation der Temperatur illustriert. In Fig. 3a) ist ein Blockschaltbild einer Kompensationsschaltung 3' mit einer sekundären Elektronikeinheit 7' und einer sekundären Sensoreinheit 6' gezeigt. Innerhalb der sekundären Elektronikeinheit 6' ist ein temperaturabhängiger Widerstand 13 integriert, welcher beispielsweise ein Widerstand des Typs PT1000 sein kann. In Fig. 3b) ist schließlich ein entsprechendes Kompensationssignal in Form eines Spannungspulses als Funktion der Zeit gezeigt. Da der temperaturabhängige Widerstand 13 den Abstand der beiden im Diagramm eingezeichneten charakteristischen Punkte A und B bestimmt, kann aus diesem Abstand die Temperatur ermittelt werden.

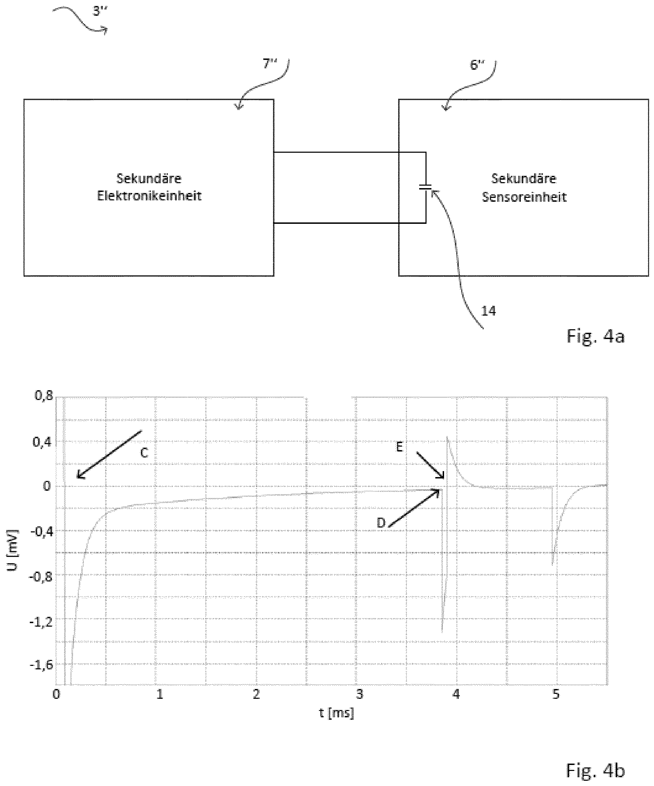

Alternativ lässt sich die Temperatur mittels einer Kompensationsschaltung mit einem Kondensator kompensieren, was in Fig. 4 gezeigt ist. Wieder beinhaltet Fig. 4a) ein Blockschaltbild einer Kompensationsschaltung 3" mit einer sekundären Elektronikeinheit 7" und einer sekundären Sensoreinheit 6", wobei innerhalb der sekundären Sensoreinheit 6" in diesem Falle ein temperaturabhängiger Kondensator 14 integriert ist. In Fig. 4b) ist wieder das entsprechende Kompensationssignals in Form eines Spannungspulses als Funktion der Zeit gezeigt. Dabei sind die Abstände zwischen den im Diagramm eingezeichneten charakteristischen Punkten C und D bzw. D und E jeweils durch den temperaturabhängigen Kondensator bestimmt.

Ein temperaturabhängiger Kondensator 14 kann neben der Verwendung zur Kompensation der Temperatur auch zur Messung der Luftfeuchtigkeit dienen.

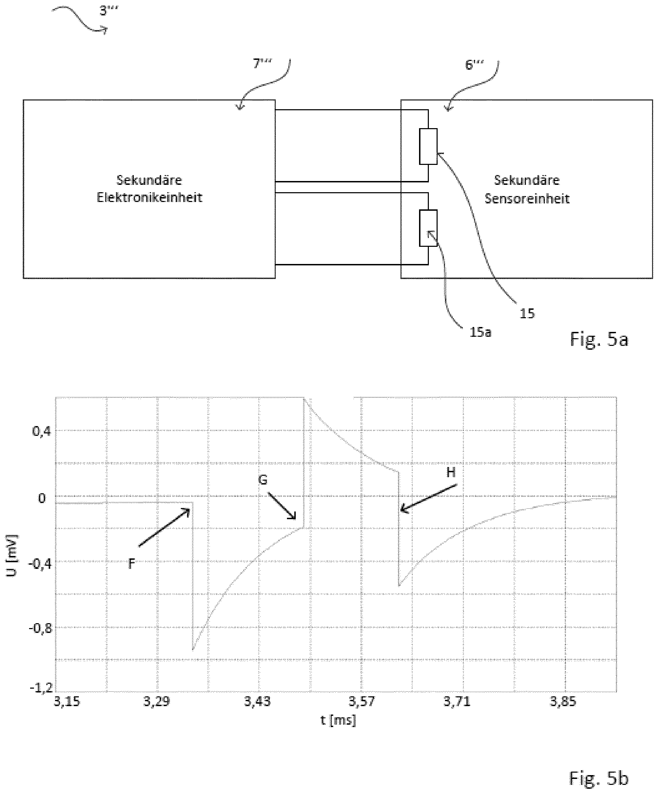

Soll anstatt der Temperatur die Ausdehnung einer Rohrleitung als Reaktion auf ein unter Druck durch die Rohrleitung fließenden Fluids kompensiert werden, eignet sich ein Aufbau wie in Fig. 5 dargestellt. Aus dem Blockdiagramm in Fig. 5a) ist ersichtlich, dass in diesem Falle innerhalb der sekundären Sensoreinheit 6'" zwei Dehnmessstreifen in Form von zwei dehnungsabhängigen Widerständen 15, 15a integriert sind. Das zugehörige Kompensationssignal ist in Fig. 5b) dargestellt. Die Ausdehnung der Rohleitung bestimmt sich aus dem Verhältnis der beiden Widerstände 15,15a, also aus den Abständen zwischen den eingezeichneten charakteristischen Punkten F und G, G und H sowie F und H.

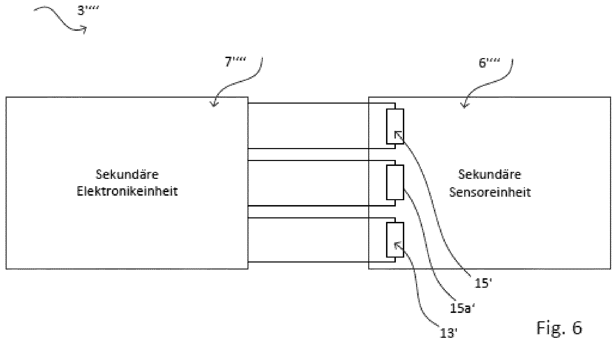

Es können jedoch auch zwei verschiedene Umwelt- und/oder Umgebungsparameter gleichzeitig kompensiert werden, wie beispielhaft in Fig. 6 gezeigt. Die sekundäre Sensoreinheit 6"" in diesem letzten Ausführungsbeispiel dient der gleichzeitigen Kompensation der Temperatur mittels eines temperaturabhängigen Widerstands 13' sowie der Kompensation der Ausdehnung der Rohrwand mittels zweier dehnungsabhängiger Widerstände 15',15a'. Unter Bezug auf das Diagramm aus Fig. 5b) kann die Ausdehnung der Rohrwand analog aus den Abständen zwischen den eingezeichneten charakteristischen Punkten F und G, G und H sowie F und H bestimmt werden, während sich die Temperatur aus dem Abstand des letzten Bursts bis zum charakteristischen Punkt F ergibt.

### Bezugszeichenliste

- 1: Erfindungsgemäße Vorrichtung
- 2: Messzweig
- 3: Kompensationszweig
- 4: Primäre Sensoreinheit
- 5: Primäre Elektronikeinheit
- 6: Sekundäre Sensoreinheit
- 7: Sekundäre Elektronikeinheit
- 8: Energiespeicher
- 9: von einem Fluid durchströmtes Messrohr
- 10,10a: Ultraschallwandler
- 11, 11a: Verbindungskabel
- 12: Elektronikeinheit gemäß Stand der Technik
- 13: temperaturabhängiger Widerstand
- 14: temperaturabhängiger Kondensator
- 15,15a: dehnungsabhängige Widerstände

## Patentansprüche

1. Vorrichtung zur Überwachung mindestens einer physikalischen oder chemischen Prozessgröße umfassend zumindest einen Messzweig (2) und einen dazu parallel geschalteten Kompensationszweig (3) zur Kompensation des Einflusses von mindestens einem externen Umwelt- oder Umgebungsparameter auf die Prozessgröße und oder auf die Messung der Prozessgröße,
wobei der Messzweig (2) zumindest eine primäre Sensoreinheit (4) und eine primäre Elektronikeinheit (5) zur Signalerfassung, -auswertung, und/oder - speisung umfasst,
wobei der Kompensationszweig (3) über zumindest eine sekundäre Sensoreinheit (6) und eine sekundäre Elektronikeinheit (7) verfügt,
wobei die sekundäre Sensoreinheit (6) so ausgestaltet ist, dass sie eine für den mindestens einen externen Umwelt- und/oder Umgebungsparameter charakteristische physikalische oder chemische Größe erfasst,
wobei die sekundäre Elektronikeinheit (7) so ausgestaltet ist, dass sie die benötigte Energie aus dem Messzweig (2) bezieht, und dass sie lokal im Kompensationszweig (3) aus der charakteristischen physikalischen oder chemischen Größe ein Kompensationssignal erzeugt, welches sie an die primäre Elektronikeinheit (5) des Messzweiges (2) überträgt.

2. Vorrichtung nach Anspruch 1,
wobei die primäre Sensoreinheit (4) mit einem getakteten Signal beaufschlagt ist, und wobei die sekundäre Elektronikeinheit (7) so ausgestaltet ist, dass sie das Kompensationssignal während der Sendepausen oder Empfangspausen an die primäre Elektronikeinheit (5) übermittelt.

3. Vorrichtung nach Anspruch 1 oder 2,
wobei die primäre (5) und sekundäre (7) Elektronikeinheit je mit einem Funkmodul oder optischen Übertragungsmodul ausgestattet sind, und wobei das Kompensationssignal mittels des Funkmoduls oder optischen Übertragungsmoduls an die primäre Elektronikeinheit (5) übermittelt wird.

4. Vorrichtung nach zumindest einem der vorhergehenden Ansprüche,
wobei der zu kompensierende externe Umwelt- und/oder Umgebungsparameter durch die Temperatur gegeben ist.

5. Vorrichtung nach Anspruch 4,
wobei zur Erfassung der Temperatur ein Widerstand (13) vorgesehen ist.

6. Vorrichtung nach Anspruch 5,
wobei zur Erfassung der Temperatur zumindest ein Kondensator (14) vorgesehen ist, und wobei die den mindestens einen externen Umwelt- und/oder Umgebungsparameter charakteristische physikalische oder chemische Größe durch die Zeitkonstante des zumindest einen Kondensators (14) gegeben ist.

7. Vorrichtung nach zumindest einem der Ansprüche 1 bis 3,
wobei der zu kompensierende Umwelt- und/oder Umgebungsparameter gegeben ist durch die Ausdehnung einer Rohrwand (9) des Messrohres eines Durchflussmessgeräts, welches mit einem unter Druck stehenden Fluid durchflossen ist.

8. Vorrichtung nach Anspruch 7,
wobei zur Messung der Ausdehnung der Rohrwand (9) mindestens zwei Dehnmesstreifen, insbesondere in Form von zwei dehnungsabhängigen Widerständen (15,15a), vorgesehen sind.

9. Vorrichtung nach zumindest einem der vorhergehenden Ansprüche,
wobei die Kommunikation zwischen der primären Sensoreinheit (4) und primären Elektronikeinheit (5) im Messzweig (2) und die Kommunikation zwischen der sekundären Sensoreinheit (6) und sekundären Elektronikeinheit (7) im Kompensationszweig (3) äquivalent erfolgen.

10. Vorrichtung nach zumindest einem der vorhergehenden Ansprüche,
wobei das Messsignal und Kompensationssignal jeweils durch eine Zeit, Zeitkonstante, und/oder Frequenz gegeben sind.

11. Vorrichtung nach zumindest einem der vorhergehenden Ansprüche,
wobei die primäre (5) und sekundäre Elektronikeinheit (7) jeweils mit einer Einheit zur bidirektionalen Kommunikation ausgestattet sind.

12. Vorrichtung nach einem der vorhergehenden Ansprüche,
wobei der Kompensationszweig (3) so ausgestaltet ist, dass mehrere externe Umwelt- und/oder Umgebungsparameter gleichzeitig kompensierbar und/oder messbar sind.

13. Vorrichtung nach zumindest einem der vorhergehenden Ansprüche,
wobei die Prozessgröße der Durchfluss eines strömenden Fluides durch ein Messrohr oder der Füllstand eines Mediums in einem Behälter ist.

14. Vorrichtung nach zumindest einem der vorhergehenden Ansprüche,
wobei die primäre Sensoreinheit (2) eine Sensoreinheit für ein Ultraschall-Durchflussmessgerät ist.

15. Verfahren zur Überwachung einer physikalischen oder chemischen Prozessgröße mittels einer Vorrichtung mit zumindest einen Messzweig (2) und einem dazu parallel geschalteten Kompensationszweig (3) zur Kompensation des Einflusses von mindestens einem externen Umwelt- und/oder Umgebungsparameter auf die Prozessgröße,
wobei im Messzweig (2) die Prozessgröße ermittelt wird,
wobei im Kompensationszweig (3) eine mindestens einen externen Umwelt- oder Umgebungseinfluss charakterisierende physikalische oder chemische Größe ermittelt wird,
wobei die für die Messung des externen Umwelt- und/oder Umgebungsparameter benötigte Energie aus dem Messzweig (2) bezogen wird,
und wobei aus der charakteristischen physikalischen oder chemischen Größe lokal im Kompensationszweig (3) das Kompensationssignal ermittelt wird, welches an die Elektronikeinheit (3) des Messzweiges übertragen wird.

## Claims

1. Apparatus for monitoring at least one physical or chemical process variable comprising at least one measuring branch (2) and one compensation branch (3), which is switched in parallel to said measuring branch, for compensating the influence of at least an external environmental and/or ambient parameter on the process variable and/or on the measurement of the process variable,
wherein the measuring branch (2) comprises at least a primary sensor unit (4) and a primary electronic unit (5) designed to measure, evaluate and/or transmit signals,
wherein the compensation branch (3) has at least a secondary sensor unit (6) and a secondary electronic unit (7),
wherein the secondary sensor unit (6) is designed in such a way that it measures a physical or chemical variable that is characteristic of the at least an external environmental and/or ambient parameter,
wherein the secondary electronic unit (7) is designed in such a way that it draws the necessary energy from the measuring branch (2), and in such a way that it locally generates a compensation signal in the compensation branch (3) from the characteristic physical or chemical variable and transmits said signal to the primary electronic unit (5) of the measuring branch (2).

2. Apparatus as claimed in Claim 1,
wherein a clocked signal is applied to the primary sensor unit (4), and wherein the secondary electronic unit (7) is designed in such a way that it transmits the compensation signal to the primary electronic unit (5) during the transmission pauses or reception pauses.

3. Apparatus as claimed in Claim 1 or 2,
wherein the primary electronic unit (5) and secondary electronic unit (7) is each equipped with a radio module or an optical transmission module, and wherein the compensation signal is transmitted to the primary electronic unit (5) by means of the radio module or the optical transmission module.

4. Apparatus as claimed in at least one of the previous claims,
wherein the external environmental and/or ambient parameter which is to be compensated is defined by the temperature.

5. Apparatus as claimed in Claim 4,
wherein a resistor (13) is provided for the measurement of the temperature.

6. Apparatus as claimed in Claim 5,
wherein at least one capacitor (14) is provided for the measurement of the temperature, and wherein the physical or chemical variable, which is characteristic of the at least one external environmental and/or ambient parameter, is defined by the time constant of the at least one capacitor (14).

7. Apparatus as claimed in at least one of the Claims 1 to 3,
wherein the environmental and/or ambient parameter that is to be compensated is defined by the expansion of a wall (9) of the measuring tube of a flowmeter through which pressurized fluid flows.

8. Apparatus as claimed in Claim 7,
wherein at least two strain gauges, particularly in the form of two expansion-dependent resistors (15, 15a), are provided to measure the expansion of a wall (9) of the measuring tube.

9. Apparatus as claimed in at least one of the previous claims,
wherein communication between the primary sensor unit (4) and the primary electronic unit (5) is implemented in the measuring branch (2) and communication between the secondary sensor unit (6) and the secondary electronic unit (7) is implemented in an equivalent manner in the compensation branch (3).

10. Apparatus as claimed in at least one of the previous claims,
wherein the measuring signal and the compensation signal are each defined by a time, a time constant and/or a frequency.

11. Apparatus as claimed in at least one of the previous claims,
wherein the primary electronic unit (5) and the secondary electronic unit (7) are each equipped with a unit for bidirectional communication.

12. Apparatus as claimed in at least one of the previous claims,
wherein the compensation branch (3) is designed in such a way that multiple external environmental and/or ambient parameters can be compensated and/or measured simultaneously.

13. Apparatus as claimed in at least one of the previous claims,
wherein the process variable is the flow of a flowing fluid through a measuring tube or the level of a medium in a vessel.

14. Apparatus as claimed in at least one of the previous claims,
wherein the primary sensor unit (2) is a sensor unit for an ultrasonic flowmeter.

15. Method for monitoring a physical or chemical process variable using an apparatus with at least one measuring branch (2) and a compensation branch (3), which is switched in parallel to said measuring branch, for compensating the influence of at least an external environmental and/or ambient parameter on the process variable,
wherein the process variable is determined in the measuring branch (2),
wherein a physical or chemical variable, which characterizes at least an external environmental and/or ambient influence, is determined in the compensation branch (3),
wherein the energy required to measure the external environmental and/or ambient parameter is drawn from the measuring branch (2),
and wherein the compensation signal is determined locally in the compensation branch (3) from the characteristic physical or chemical variable, said signal being transmitted to the electronic unit (3) of the measuring branch.

## Revendications

1. Dispositif destiné à la surveillance d'au moins une grandeur de process physique ou chimique comprenant au moins une branche de mesure (2) et une branche de compensation (3) couplée en parallèle à celle-ci, laquelle est destinée à la compensation de l'influence d'au moins un paramètre externe environnant et/ou ambiant sur la grandeur de process et/ou sur la mesure de la grandeur de mesure,
la branche de mesure (2) comprenant au moins une unité de capteur primaire (4) et une unité électronique primaire (5) destinées à la mesure, l'exploitation et/ou la transmission de signaux,
la branche de compensation (3) disposant au moins d'une unité de capteur secondaire (6) et d'une unité électronique secondaire (7),
l'unité de capteur secondaire (6) étant conçue de telle sorte qu'elle mesure une grandeur physique ou chimique caractéristique pour le paramètre externe environnant et/ou ambiant,
l'unité électronique secondaire (7) étant conçue de telle sorte qu'elle tire l'énergie nécessaire à partir de la branche de mesure (2), et de telle sorte qu'elle génère, localement dans la branche de compensation (3), un signal de compensation à partir de la grandeur physique ou chimique caractéristique, lequel signal elle transmet à l'unité électronique primaire (5) de la branche de mesure (2).

2. Dispositif selon la revendication 1,
pour lequel l'unité de capteur primaire (4) est alimentée avec un signal cadencé, et l'unité électronique secondaire (7) est conçue de telle sorte à transmettre à l'unité électronique primaire (5) le signal de compensation pendant les pauses d'émission ou les pauses de réception.

3. Dispositif selon la revendication 1 ou 2,
pour lequel l'unité électronique primaire (5) ou secondaire (7) est chacune équipée d'un module radio ou d'un module de transmission optique, et le signal de compensation est transmis à l'unité électronique primaire (5) au moyen du module radio ou du module de transmission optique.

4. Dispositif selon au moins l'une des revendications précédentes,
pour lequel le paramètre externe environnant et/ou ambiant, devant être compensé, est défini par la température.

5. Dispositif selon la revendication 4,
pour lequel est prévue une résistance (13) pour la mesure de la température.

6. Dispositif selon la revendication 5,
pour lequel est prévu au moins un condensateur (14) pour la mesure de la température, et la grandeur physique ou chimique caractérisant l'au moins un paramètre externe environnant et/ou ambiant est définie par la constante de temps de l'au moins un condensateur (14).

7. Dispositif selon au moins l'une des revendications 1 à 3,
pour lequel le paramètre externe environnant et/ou ambiant, devant être compensé, est défini par l'allongement d'une paroi (9) du tube de mesure d'un débitmètre, lequel tube est parcouru par un fluide sous pression.

8. Dispositif selon la revendication 7,
pour lequel sont prévus, pour la mesure de l'allongement de la paroi de tube (9), au moins deux extensomètres, notamment sous la forme de deux résistances (15, 15a) dépendant de l'allongement.

9. Dispositif selon au moins l'une des revendications précédentes,
pour lequel la communication entre l'unité de capteur primaire (4) et l'unité électronique primaire (5) s'effectue dans la branche de mesure (2) et la communication entre l'unité de capteur secondaire (6) et l'unité électronique secondaire (7) s'effectue de manière équivalente dans la branche de compensation (3).

10. Dispositif selon au moins l'une des revendications précédentes,
pour lequel le signal de mesure et le signal de compensation sont chacun définis par un temps, une constante de temps et/ou une fréquence.

11. Dispositif selon au moins l'une des revendications précédentes,
pour lequel l'unité électronique primaire (5) et secondaire (7) sont chacune équipées d'une unité destinée à la communication bidirectionnelle.

12. Dispositif selon au moins l'une des revendications précédentes,
pour lequel la branche de compensation (3) est conçue de telle sorte que plusieurs paramètres externes environnants et/ou ambiants peuvent être compensés et/ou mesurés simultanément.

13. Dispositif selon au moins l'une des revendications précédentes,
pour lequel la grandeur de process est le débit d'un fluide s'écoulant à travers un tube de mesure ou le niveau d'un produit dans un réservoir.

14. Dispositif selon au moins l'une des revendications précédentes,
pour lequel l'unité de capteur primaire (2) est une unité de capteur pour un débitmètre à ultrasons.

15. Procédé destiné à la surveillance d'une grandeur de mesure physique ou chimique au moyen d'un dispositif avec au moins une branche de mesure (2) et une branche de compensation (3) couplée en parallèle à celle-ci, laquelle est destinée à la compensation de l'influence d'au moins un paramètre externe environnant et/ou ambiant sur la grandeur de process,
la grandeur de process étant déterminée dans la branche de mesure (2),
au moins une grandeur physique ou chimique, caractérisant une influence externe environnante ou ambiante, étant déterminée dans la branche de compensation (3),
l'énergie nécessaire pour la mesure du paramètre externe environnant et/ou ambiant étant tirée de la branche de mesure (2),
et le signal de compensation étant déterminé localement dans la branche de compensation (3) à partir de la grandeur physique ou chimique caractéristique, lequel signal de compensation est transmis à l'unité électronique (3) de la branche de mesure.
